# EUROPEAN PATENT SPECIFICATION

(11) **EP 1 997 775 B1**
(45) Date of publication and mention of the grant of the patent: **09.04.2014**
(21) Application number: 07737332.2
(22) Date of filing: 16.02.2007
(51) Int. Cl.: C01B 7/04

(54) **Hydrogen chloride oxidation reaction apparatus and hydrogen chloride oxidation reaction method**
CHLORWASSERSTOFFOXIDATIONSVORRICHTUNG UND CHLORWASSERSTOFFOXIDATIONSVERFAHREN
APPAREIL ET PROCEDE D'OXYDATION DE CHLORURE D'HYDROGENE

(30) Priority: 20.02.2006 JP 2006042444
(43) Date of publication of application: 03.12.2008
(73) Proprietor: Sumitomo Chemical Company, Limited, Tokyo 104-8260 (JP)
(72) Inventor: KOSHINO, Kazuya, Niihama-shi, Ehime 792-0025 (JP); MORI, Yasuhiko, Niihama-shi, Ehime 792-0017 (JP); OMOTO, Norihito, Niihama-shi, Ehime 792-0025 (JP)
(74) Representative: Vossius & Partner
(86) International application number: PCT/JP2007/053340
(87) International publication number: WO 2007/097408

(56) References cited:
- JP-A- 53 125 989
- JP-A- 63 230 504
- JP-A- 2003 119 003
- JP-A- 2005 255 470
- JP-A- 2005 306 734
- US-A- 3 544 274
- US-A1- 2002 172 640
- CHLORINE: 9.2.1 Catalytic Oxidation of Hydrogen Chloride by Oxygen, 11.6 Materials. HYDROCHLORIC ACID: 1.2 Chemical Properties.: In: P. SCHMITTINGER, E. ZELFEL, S. AUSTIN: "Ullmann's Encyclopedia of Industrial Chemistry" 1986, VSH , Weinheim , XP002589661 ISBN: 3-527-20106-8 * Vol. A6: page 461, 462 and 471 ("Wet chlorine gas") * * Vol. A13: page 286 *
- F. CARDERELLI, P. TAXIL, A. SAVALL: "Tantalum Protective Thin Coating Techniques for the Chemical Process Industry: Molten Salts Electrocoating as a New Alternative" INT. J. OF REFRACTORY METALS & HARD MATERIALS, vol. 14, no. 5-6, 1996, pages 365-381, XP002589662 Great Britain ISSN: 0263-4368

## Description

### TECHNICAL FIELD

The present invention relates to a hydrogen chloride oxidation reaction apparatus for producing chlorine by oxidizing hydrogen chloride through a contact gas phase reaction in the presence of a catalyst, as well as to a hydrogen chloride oxidation reaction method using the same.

### BACKGROUND ART

A process of producing chlorine by oxidizing hydrogen chloride through a contact gas phase reaction in the presence of a catalyst is a general method for producing chlorine. Major reaction raw materials in the hydrogen chloride oxidation process are a hydrogen chloride gas and an oxygen gas. Typically, however, unreacted hydrogen chloride and oxygen that are collected after the hydrogen chloride oxidation reaction are recycled and mixed with a hydrogen chloride gas and an oxygen gas that are raw materials, so as to be used as a part of the reaction agents.

Since the hydrogen chloride oxidation reaction is typically carried out at a reaction temperature of about 300 to 400°C, it is necessary that the hydrogen chloride gas and the oxygen gas which are the raw materials and the recycled gases such as the recycled hydrogen chloride and the recycled oxygen are heated in advance up to 250 to 300°C. Such preheating is carried out independently for each gas or after a part or the whole of these gases is mixed.

However, since a part of these raw material gases and the recycled gases may contain moisture, the material of the hydrogen chloride oxidation reaction apparatus, particularly the material of the transfer piping for supplying the raw material gases and the recycled gases to the reactor for the hydrogen chloride oxidation reaction, must be suitably selected in consideration of this moisture. That is, though varying depending on the pressure and the gas composition, at a temperature that sufficiently exceeds the dew point of hydrochloric acid which is around about 100 to 200°C, stainless steel, nickel, and a nickel alloy can be applied as the material of the piping; however, below the dew point of hydrochloric acid and near the dew point, these metal materials will be corroded, so that the selection of applicable materials is accompanied by difficulty.

Research Committee on Corrosion Engineering of the Society of Materials Science, Japan Data vol. 30, No. 162, pages 11-18 (1991) describes the selection of materials of the reactor in the hydrogen chloride oxidation process, however, no description is given as to the material of the transfer piping for transferring the raw material gases and the recycled gases to the reactor.

Methods for producing chlorine by oxidizing hydrogen chloride through a contact phase reaction in the presence of a catalyst are described in Ullmann's Encyclopedia of Industrial Chemistry, 1986, VCH, Vol. A6, pages 461, 462 and 471. It is also mentioned that in the KEL Chlorine Process tantalum-plated material and pipes must be used due to the aggressive nature of the materials.

US 3,544,274 describes process where hydrogen halide is oxidized with oxygen in the presence of an oxygen-containing compound of nitrogen as a catalyst, the gaseous oxidizer effluent is passed to a sulfuric acid absorption zone, to dry said effluent and the gaseous effluent from the absorption zone is introduced into a distillation zone wherein halogen is separated in a gaseous overhead mixture from a liquid effluent containing a nitrogen oxide halide and halogen, the improvement wherein the liquid effluent is passed as a coolant to the oxidizer and/or the absorber to control the exothermic heat of reaction, to convert the nitrogen oxide halide to halogen and to utilize the exothermic heat of reaction to provide reboiling in the distillation zone.

Corrosion resistance and basic properties of solid tantalum and tantalum protective thin coating techniques have been studied by F. Carderelli, P. Taxil, A. Savall in Int. J. of Refractory Metals & Hard Materials, vol. 14, no. 5-6, 1996, pages 365-381.

### DISCLOSURE OF THE INVENTION

The present invention has been made in order to solve the aforementioned problems, and an object thereof is to provide a hydrogen chloride oxidation reaction apparatus and a hydrogen chloride oxidation reaction method by which the mixing of the raw material gases and/or the introduction of the recycled gases and the preheating of the mixed gases can be carried out without generating corrosion on the gas contact surface of the mixing portion for mixing the raw material gases, on the gas contact surface of the introducing portion for introducing the recycled gases, and on the gas contact surface of the transfer piping portion for transferring the raw material gases and the recycled gases to the reactor for hydrogen chloride oxidation reaction in a process of producing chlorine by oxidizing hydrogen chloride through a contact gas phase reaction in the presence of a catalyst by using hydrogen chloride and oxygen as major raw materials.

The present invention relates to a hydrogen chloride oxidation reaction apparatus for producing chlorine by oxidizing hydrogen chloride through a contact gas phase reaction in the presence of a catalyst by using hydrogen chloride and oxygen as major raw materials, wherein the hydrogen chloride oxidation reaction apparatus includes a mixing portion for mixing the raw material gases and a transfer piping portion for transferring the mixed raw material gases from the mixing portion to a reactor for a hydrogen chloride oxidation reaction, and wherein a gas contact surface of the mixing portion and/or a part of a gas contact surface of the transfer piping portion is made of tantalum or a tantalum-tungsten alloy or is covered with tantalum or a tantalum-tungsten alloy, and wherein the hydrogen chloride chloride oxidation reaction apparatus further includes an installation for supplying water vapor to at least a part of the portion that is made of or covered with tantalum or a tantalum-tungsten alloy so that a moisture concentration in the mixed gases at the portion that is made of or covered with tantalum or a tantalum-tungsten alloy is 0.5 mol% or above.

Also, the present invention relates to the above-described hydrogen chloride oxidation reaction apparatus, further including an introducing portion for introducing a recycled gas, which is collected after the hydrogen chloride oxidation reaction, into the mixed raw material gases, wherein a gas contact surface of the introducing portion is made of tantalum or a tantalum-tungsten alloy or is covered with tantalum or a tantalum-tungsten alloy.

Also, the present invention relates to a hydrogen chloride oxidation reaction method using the above-described hydrogen chloride oxidation reaction apparatus according to claim 3.

Further, disclosed herein is a method of use of a piping for transferring a gas containing a hydrogen chloride gas, a part of a gas contact surface of which is made of tantalum or a tantalum-tungsten alloy or is covered with tantalum or a tantalum-tungsten alloy, wherein a moisture concentration in the gas containing a hydrogen chloride gas at the portion that is made of or covered with tantalum or a tantalum-tungsten alloy is set to be 0.5 mol% or above.

According to the present invention, the mixing of the raw material gases and/or the introduction of the recycled gases and the preheating of the mixed gases can be carried out without generating corrosion on the gas contact surface of the mixing portion for mixing the raw material gases, on the gas contact surface of the introducing portion for introducing the recycled gases, and on the gas contact surface of the transfer piping portion for transferring the raw material gases and the recycled gases to the reactor for hydrogen chloride oxidation reaction in a process of producing chlorine by oxidizing hydrogen chloride through a contact gas phase reaction in the presence of a catalyst by using hydrogen chloride and oxygen as major raw materials. Also, according to the method of the present invention, generation of corrosion on the piping for transferring the gases can be prevented in various reactions that deal with gases containing hydrogen chloride besides the hydrogen chloride oxidation reaction.

This can reduce additional work or costs such as for repairing or replacing the corroded portion. Further, contamination of the transfer piping for transferring the raw material gases, the reactor, and the like by metal chloride or the like can be prevented.

### BRIEF DESCRIPTION OF THE DRAWINGS

Fig. 1 is a conceptual view showing a hydrogen chloride oxidation reaction apparatus of the first to third embodiments of the present invention.
Fig. 2 is a conceptual view showing a hydrogen chloride oxidation reaction apparatus of the fourth embodiment of the present invention.

### DESCRIPTION OF THE SYMBOLS

11, 201 mixing portion, 12, 202 introducing portion, 13, 203 reactor, 1, 2, 3, 4, 5 transfer piping, T14,T15,T16, T 17, T204, T205, T206, T210 transfer pipe, 207, 208, 209 heat exchanger.

### BEST MODES FOR CARRYING OUT THE INVENTION

The hydrogen chloride oxidation reaction apparatus of the present invention is a hydrogen chloride oxidation reaction apparatus for producing chlorine by oxidizing hydrogen chloride through a contact gas phase reaction in the presence of a catalyst by using hydrogen chloride and oxygen as major raw materials, wherein the hydrogen chloride oxidation reaction apparatus includes a mixing portion for mixing the raw material gases and a transfer piping portion for transferring the mixed raw material gases from the mixing portion to a reactor for a hydrogen chloride oxidation reaction, and wherein a gas contact surface of the mixing portion and/or a part of a gas contact surface of the transfer piping portion is made of tantalum or a tantalum-tungsten alloy or is covered with tantalum or a tantalum-tungsten alloy. By having such characteristics, the mixing of the raw material gases and the preheating of the mixed raw material gases can be carried out without generating corrosion on the gas contact surface of the mixing portion and/or on the transfer piping portion.

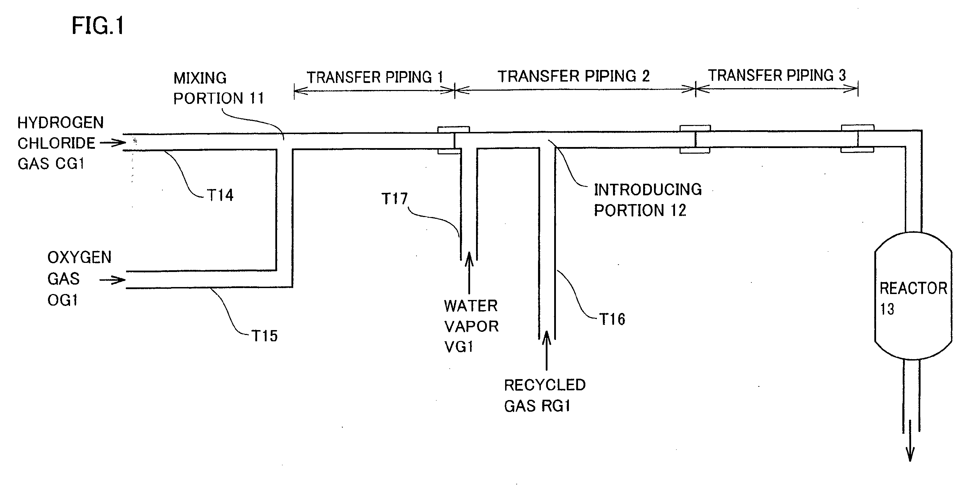

Here, in the present specification, the term "mixing portion" refers to one part of the hydrogen chloride oxidation reaction apparatus which is a part where the hydrogen chloride gas and the oxygen gas constituting the raw materials are mixed. The shape of the "mixing portion" is not particularly limited. However, as shown schematically in Fig. 1, it does not need to constitute an independent part having a particularly special shape, so that it may be simply a connecting portion of a transfer pipe for transferring a hydrogen chloride gas and a transfer pipe for transferring an oxygen gas.

In the present specification, the term "introducing portion" refers to one part of the hydrogen chloride oxidation reaction apparatus which is a part where the recycled gas collected after the hydrogen chloride oxidation reaction is introduced into the mixed raw material gases.

The shape of the "introducing portion" is not particularly limited. However, as shown schematically in Fig. 1, it does not need to constitute an independent part having a particularly special shape, so that it may be simply a connecting portion of a transfer pipe for transferring the mixed raw material gases and the transfer pipe for supplying the recycled gases. The term "recycled gases" refer to gases that are collected after the hydrogen chloride oxidation reaction and are reused as a part of the raw materials of the hydrogen chloride oxidation reaction. Specifically, they are a hydrogen chloride gas and an oxygen gas. These recycled gases may in some cases contain a chlorine gas and/or water which are reaction products. The hydrogen chloride gas and the oxygen gas may be each separately collected or may be collected together. Also, these recycled gases may be separately introduced into the mixed raw material gases, or may be introduced together.

Also, in the present specification, the term "gas contact surface" refers to an inner wall surface which is brought into contact with the transferred gases.

### <First embodiment> (Reference)

Hereinafter, the first embodiment of the hydrogen chloride oxidation reaction apparatus will be described with reference to Fig. 1. Fig. 1 is a conceptual view showing one embodiment of the hydrogen chloride oxidation reaction apparatus of the present invention, and schematically illustrates a passageway of the transfer pipes for transferring raw material gases from each supplying portion for supplying a hydrogen chloride gas CG1 and an oxygen gas OG1 which are reaction raw materials to a reactor 13 for the hydrogen chloride oxidation reaction. Here, in the description of the present embodiment, it is assumed that a recycled gas RG1 and a water vapor VG1 described in Fig. 1 as well as the transfer pipes (T16, T17) for supplying these are absent.

In Fig. 1, first, hydrogen chloride gas CG1 and oxygen gas OG1 which are reaction raw materials are supplied from the respective supplying portions and pass through separate transfer pipes (T14 or T15) to reach a mixing portion 11 to be mixed. The mixed raw material gases pass successively through a transfer piping 1, a transfer piping 2, and a transfer piping 3 having a heat exchanger (not illustrated) and are preheated to have eventually a temperature of about 250°C to be supplied to reactor 13. Here, in transfer piping 1, the mixed raw material gases are heated from around ordinary temperature to about 100 to 160°C. In transfer piping 2, the mixed raw material gases are heated to about 200°C. In transfer piping 3, the mixed raw material gases are heated to about 250°C.

In the present embodiment, hydrogen chloride gas CG1 and oxygen gas OG1 which are raw materials are supplied at a temperature around ordinary temperature. The pressure of the raw material gases may be ordinary pressure or may be subjected to pressurization. In the case the raw material gases are pressurized, it is particularly preferable that the pressure is 0.1 to 1.0 MPa. As the materials of transfer pipe T 14 from the hydrogen chloride gas supplying portion to mixing portion 11 and mixing portion 11, any material can be used as long as it is not corroded by a hydrogen chloride gas at this temperature; however, metals such as carbon steel, stainless steel, and a nickel alloy and a fluororesin can be mentioned as examples.

A piping whose gas contact surface is made of or covered with tantalum or a tantalum-tungsten alloy can be used for these portions; however, in consideration of costs, it is preferable to use a piping made of the aforementioned materials. Also, as the material of transfer pipe T 15 from the oxygen supplying portion to mixing portion 11, comparatively wide range of materials can be selected because oxygen itself does not have a metal corrosion property, and non-flammable materials such as stainless steel such as SUS304 or SUS316L, carbon steel, nickel, or a nickel alloy can be used. Of course, in a similar manner, a piping whose gas contact surface is made of or covered with tantalum or a tantalum-tungsten alloy can also be used.

Here, tantalum used as a construction material or a covering material is not particularly limited; however, tantalum having a purity of 99.80% or above is preferably used. The tantalum-tungsten alloy used as a construction material or a covering material is not particularly limited; however, for example, tantalum-2.5% tungsten, tantalum-10% tungsten, or the like can be used. Among these, tantalum-2.5% tungsten has an anti-corrosion property equivalent to that of tantalum, and hence is especially preferable. Also, as a method for covering the gas contact surface with tantalum or a tantalum-tungsten alloy, a conventionally known method can be employed, and a method by coating or lining can be mentioned as an example.

For the material of transfer piping 1, a fluororesin is preferably used. A piping whose gas contact surface is made of or covered with tantalum or a tantalum-tungsten alloy can be used for transfer piping 1; however, in view of the costs, it is preferable to use a piping made of a fluororesin or a piping whose inner surface is coated or lined with a fluororesin.

In transfer piping 2, the raw material gases are further heated up to about 200°C. The gas contact surface of transfer piping 2 is made of or covered with tantalum or a tantalum-tungsten alloy. By constructing or covering the gas contact surface of transfer piping 2 with tantalum or a tantalum-tungsten alloy in this manner, the mixed raw material gases can be preheated up to about 200°C without generating corrosion to the gas contact surface of transfer piping 2 even if the raw material gases contain moisture. Here, a piping made of a fluororesin or the like cannot be used for transfer piping 2. This is because it will be softened at a temperature of 160 to 200°C. Also, a piping made of a metal material such as stainless steel, nickel, or a nickel alloy cannot be used either. This is because, if moisture is contained in the raw material gases, these metals will be corroded in a temperature range to which transfer piping 2 is exposed.

As the material of transfer piping 3, it is preferable to use stainless steel, nickel, a nickel alloy, or the like. This is because these materials will not be corroded in a high-temperature range of 200 to 250°C which is sufficiently higher than the dew point of hydrochloric acid. A piping whose gas contact surface is made of or covered with tantalum or a tantalum-tungsten alloy can be used for transfer piping 3; however, in view of the costs, it is preferable to use a piping made of stainless steel, nickel, a nickel alloy, or the like.

As described above, by constructing or covering at least the gas contact surface of transfer piping 2 with tantalum or a tantalum-tungsten alloy, the raw material gases can be preheated to a predetermined temperature without generating corrosion.

### <Second embodiment (Reference)

The second embodiment of the hydrogen chloride oxidation reaction apparatus is a hydrogen chloride oxidation reaction apparatus in which the first embodiment is further provided with an introducing portion 12 for introducing a recycled gas RG1 into the mixed raw material gases, wherein the gas contact surface of introducing portion 12 is made of or covered with tantalum or a tantalum-tungsten alloy. By having such characteristics, the introduction of recycled gas RG1 and the preheating of the mixed raw material gases and the raw material gases after the introduction of the recycled gas can be carried out without generating corrosion on introducing portion 12 either.

The present embodiment also will be described with reference to Fig. 1. Here, in the description of the present embodiment, it is assumed that water vapor VG1 illustrated in Fig. 1 and transfer pipe T 17 for supplying this are absent.

Here, description on the parts overlapping with those of the first embodiment will not be repeated, and only the part characteristic to the present embodiment will be described. The part characteristic to the present embodiment is introducing portion 12 for introducing recycled gas RG1 into the raw material gases. In the present embodiment, introducing portion 12 is disposed on transfer piping 2. Recycled gas RG1 enters transfer piping 2 through this introducing portion 12, and is introduced into the raw material gases including hydrogen chloride gas CG1 and oxygen gas OG1. The raw material gases into which recycled gas RG1 has been introduced are heated eventually up to about 200°C in transfer piping 2. The temperature of the introduced recycled gas RG1 is not particularly limited; however, it is about 120°C in the present embodiment.

The gas contact surface of introducing portion 12 into which recycled gas RG1 is introduced and transfer piping 2 is made of or covered with tantalum or a tantalum-tungsten alloy. By constructing or covering the gas contact surface of introducing portion 12 and transfer piping 2 with tantalum or a tantalum-tungsten alloy in this manner, the raw material gases including hydrogen chloride gas CG1 and oxygen gas OG1 can be mixed with recycled gas RG1 without generating corrosion on the gas contact surface of introducing portion 12 and on the gas contact surface of transfer piping 2, and further the raw material gases can be preheated up to about 200°C. Here, a material such as a fluororesin cannot be used for transfer piping 2. This is because it will be softened at a temperature of 160 to 200°C. Also, a metal material such as stainless steel, nickel, or a nickel alloy cannot be used either. This is because, if moisture is contained in the raw material gases or in the recycled gas, these metals will be corroded in a temperature range to which introducing portion 12 and transfer piping 2 are exposed.

Here, the position of introducing portion 12 in transfer piping 2 is not particularly limited. Also, in the event that hydrogen chloride and oxygen are respectively separately collected after the hydrogen chloride oxidation reaction, a plurality of the introducing portions may be provided so that the respective recycled gases can be separately introduced into the raw material gases.

As described above, by constructing or covering at least the gas contact surfaces of introducing portion 12 and transfer piping 2 with tantalum or a tantalum-tungsten alloy, the raw material gases can be preheated to a predetermined temperature without generating corrosion.

### <Third embodiment>

The third embodiment of the hydrogen chloride oxidation reaction apparatus of the present invention is a hydrogen chloride oxidation reaction apparatus in which the first embodiment or the second embodiment is further provided with an installation for supplying water vapor VG1 to at least a part of the portion that is made of or covered with tantalum or a tantalum-tungsten alloy so that a moisture concentration in the mixed gases at the portion that is made of or covered with tantalum or a tantalum-tungsten alloy is 0.5 mol% or above. Here, the term "mixed gases" refers to either the raw material gases obtained by mixing hydrogen chloride gas CG1 and oxygen gas OG1 constituting the raw materials or the raw material gases obtained by introducing recycled gas RG1 into the mixed raw material gases. By having such characteristics, corrosion of the portions that are made of or covered with tantalum or a tantalum-tungsten alloy can be prevented with more certainty particularly in a high-temperature range of about 150°C or above.

The present embodiment also will be described with reference to Fig. 1. Here, description on the parts overlapping with those of the first or second embodiment will not be repeated, and only the part characteristic to the present embodiment will be described. The part characteristic to the present embodiment is an installation for supplying water vapor VG1 to at least a part of the portion that is made of or covered with tantalum or a tantalum-tungsten alloy.

In the present embodiment, an installation for supplying water vapor VG1 to transfer piping 2 is attached. The installation for supplying water vapor is not particularly limited as long as it can supply water vapor, so that it may have a structure in which a transfer pipe for supplying water vapor is simply connected to transfer piping 2, as shown in Fig. 1. There may be one or a plurality of installations for supplying water vapor per one hydrogen chloride oxidation reaction apparatus. By supplying water vapor so that a moisture concentration in the mixed gases at the portion that is made of or covered with tantalum or a tantalum-tungsten alloy is 0.5 mol% or above, corrosion of the portions that are made of or covered with tantalum or a tantalum-tungsten alloy can be prevented with more certainty particularly in a high-temperature range of about 150°C or above.

The position at which the water vapor is supplied is preferably before introducing portion 12 for introducing recycled gas RG1. This is because, if the water vapor supplying position is after the introducing portion, the moisture concentration in the mixed gases may be lower than 0.5 mol% before the introducing portion. Also, the position at which the water vapor is supplied is preferably in the former half part of transfer piping 2, and more preferably around the boundary of transfer piping 1 and transfer piping 2. By providing the water vapor supplying position in the former half part of transfer piping 2, the transfer piping portion at which the moisture concentration in the mixed gases is lower than 0.5 mol% can be made as little as possible. Also, by providing the water vapor supplying position around the boundary of transfer piping 1 and transfer piping 2, the transfer piping portion at which the moisture concentration in the mixed gases is lower than 0.5 mol% can be eliminated.

The amount of the water vapor supplied by the installation for supplying water vapor is not particularly limited as long as it is an amount such that a moisture concentration in the mixed gases at the portion that is made of or covered with tantalum or a tantalum-tungsten alloy is 0.5 mol% or above. However, when the moisture concentration is too high, there is a possibility of affecting the reaction speed of the hydrogen chloride oxidation reaction, so that it is preferably 10 mol% or below.

### <Fourth embodiment>

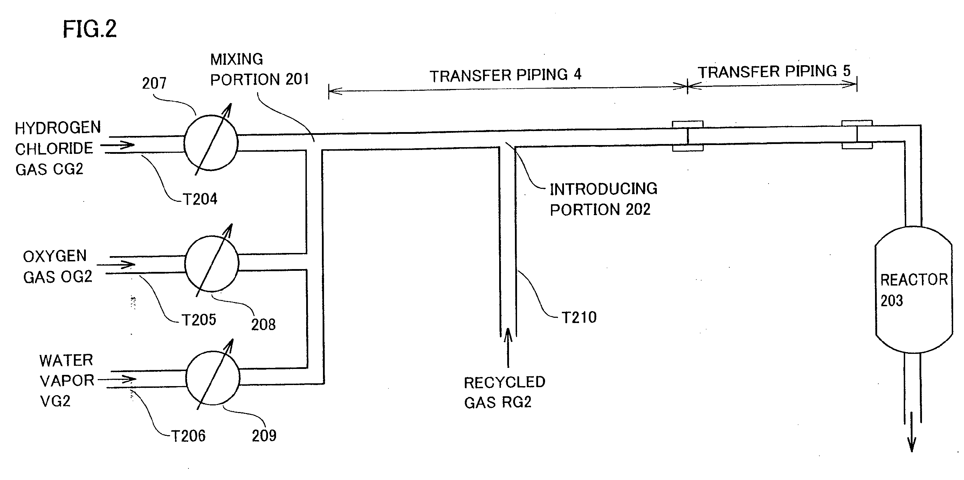

Fig. 2 is a conceptual view showing a hydrogen chloride oxidation reaction apparatus of the fourth embodiment of the present invention and schematically illustrates a passageway of the transfer pipes for transferring raw material gases from each supplying portion for supplying a hydrogen chloride gas CG2 and an oxygen gas OG2 which are reaction raw materials and a recycled gas RG2 collected after the hydrogen chloride oxidation reaction to a reactor 203 for the hydrogen chloride oxidation reaction.

In Fig. 2, first, hydrogen chloride gas CG2 and oxygen gas OG2 which are the reaction raw materials are supplied from the respective supplying portions and, after being preheated up to about 200°C respectively by heat exchangers 207, 208, the gases reach a mixing portion 201 to be mixed. In a similar manner, water vapor VG2 preheated to about 200°C by a heat exchanger 209 is supplied to mixing portion 201. The mixed raw material gases including a hydrogen chloride gas, an oxygen gas, and water vapor pass successively through a transfer piping 4 and a transfer piping 5 having a heat exchanger (not illustrated) to be preheated, so as to have eventually a temperature of about 250°C to be supplied to reactor 203. A transfer pipe T210 for introducing recycled gas RG2 collected after the hydrogen chloride oxidation reaction is connected to transfer piping 4 via an introducing portion 202. Recycled gas RG2 enters transfer piping 4 through this introducing portion 202, and is introduced into the raw material gases including hydrogen chloride gas CG2, oxygen gas OG2, and water vapor VG2. In transfer piping 4, the raw material gases into which recycled gas RG2 has been introduced will temporarily have a lower temperature due to recycled gas RG2 having a comparatively low temperature. Eventually, however, in transfer piping 5, the mixed gases into which recycled gas RG2 has been introduced will be heated up to about 250°C.

Here, in the present embodiment, hydrogen chloride gas CG2, oxygen gas OG2, and water vapor VG2 are preheated up to about 200°C; however, it is not limited to this temperature alone. The pressure of the raw material gases may be an ordinary pressure or the gases may be pressurized. In the case of being pressurized, it is preferably from 0.1 to 1.0 MPa. The pressure of the water vapor may be an ordinary pressure or the water vapor may be pressurized. In the case of being pressurized, it is preferably from 0.1 to 1.0 MPa. As the material of a transfer pipe T204 from the hydrogen chloride gas supplying portion to mixing portion 201, carbon steel or stainless steel, for example, are used in order to prevent corrosion. As the material of a transfer pipe T205 from the oxygen supplying portion to mixing portion 201, comparatively wide range of materials can be selected because oxygen itself does not have a metal corrosion property, and for example, stainless steel such as SUS304 or SUS316L, carbon steel, nickel, or a nickel alloy can be used. Also, as the material of a transfer pipe T206 from the water vapor supplying portion to the connecting portion for connection to the oxygen transfer pipe, for example, stainless steel such as SUS304 or SUS316L, carbon steel, nickel, or a nickel alloy is used. Here, in the present embodiment, transfer pipe T206 for supplying water vapor is connected to transfer pipe T205 for supplying oxygen before reaching mixing portion 201; however, it may have a structure such that transfer pipe T206 for supplying water vapor is directly connected to mixing portion 201.

The amount of the supplied water vapor is not particularly limited as long as it is an amount such that a moisture concentration in the mixed gases at the portion that is made of or covered with tantalum or a tantalum-tungsten alloy is 0.5 mol% or above. However, when the moisture concentration is too high, there is a possibility of affecting the reaction speed of the hydrogen chloride oxidation reaction, so that it is preferably 10 mol% or below. There may be one or a plurality of installations for supplying water vapor per one hydrogen chloride oxidation reaction apparatus.

The gas contact surface of mixing portion 201 at which hydrogen chloride gas CG2 and oxygen gas OG2 serving as the raw materials and water vapor VG2 are mixed is made of or covered with tantalum or a tantalum-tungsten alloy. By constructing or covering the gas contact surface of mixing portion 201 with tantalum or a tantalum-tungsten alloy, corrosion of mixing portion 201 can be avoided, and further by supplying water vapor VG2 to mixing portion 201, corrosion of mixing portion 201 can be prevented with more certainty. Here, for the transfer pipe in the peripheries of mixing portion 201, a piping made of or covered with tantalum or a tantalum-tungsten alloy can be used.

The gas contact surface of introducing portion 202 at which recycled gas RG2 is introduced and transfer piping 4 is also made of or covered with tantalum or a tantalum-tungsten alloy. By constructing or covering the gas contact surfaces of introducing portion 202 and transfer piping 4 with tantalum or a tantalum-tungsten alloy in this manner, recycled gas RG2 can be introduced into the raw material gases including hydrogen chloride gas CG2 and oxygen gas OG2 without generating corrosion on the gas contact surface of introducing portion 202 and on the gas contact surface of transfer piping 4, and further the mixed gases can be preheated up to about 200°C. Also, since the raw material gases to which water vapor VG2 has been supplied at introducing portion 201 enters transfer piping 4 while retaining the same gas composition, the moisture concentration in the mixed gases is basically maintained to be 0.5 mol% or above at transfer piping 4 and at introducing portion 202. This can prevent the corrosion of transfer piping 4 and introducing portion 202 with certainty. The description of "basically" is given because, depending on the moisture concentration of the introduced recycled gas RG2, the moisture concentration of the mixed gases after the introduction of recycled gas RG2 may not be, in some cases, 0.5 mol% or above. In order to prepare for such a case, the amount of water vapor supplied to mixing portion 201 may be increased in advance or another installation for supplying water vapor may be provided before introducing portion 202 in transfer piping 4. Here, the reason why the raw material gases having entered transfer piping 4 at about 200°C must be heated again to about 200°C is that, in the present embodiment, the recycled gas is introduced at a temperature of about 120°C into transfer piping 4. However, the temperature of the recycled gas is not particularly limited. Here, in the event that hydrogen chloride and oxygen are respectively separately collected after the hydrogen chloride oxidation reaction, a plurality of introducing portions may be provided so that the respective recycled gases can be separately introduced into the raw material gases.

As the material of transfer piping 5, it is preferable to use stainless steel, nickel, a nickel alloy, or the like. This is because these materials will not be corroded in a high-temperature range of 200 to 250°C which is sufficiently higher than the dew point of hydrochloric acid. A piping whose gas contact surface is made of or covered with tantalum or a tantalum-tungsten alloy can be used for transfer piping 5. Here, the purity of tantalum or a tantalum-tungsten alloy used as a construction material or a covering material, as well as the covering method are similar to those in the first embodiment.

As described above, by constructing or covering at least the gas contact surfaces of mixing portion 201 at which hydrogen chloride gas CG2 and oxygen gas OG2 serving as raw materials are mixed, introducing portion 202 at which recycled gas RG2 is introduced, and transfer piping 4 with tantalum or a tantalum-tungsten alloy, the raw material gases can be mixed, and further recycled gas RG2 can be introduced into the raw material gases, and also the mixed gases can be preheated to a predetermined temperature without generating corrosion. Furthermore, by supplying water vapor VG2 so that the moisture concentration in the mixed gases at the portion that is made of or covered with tantalum or a tantalum-tungsten alloy will be 0.5 mol% or above, corrosion of the portions that are made of or covered with tantalum or a tantalum-tungsten alloy can be prevented with certainty.

### <Hydrogen chloride oxidation reaction method>

Also, by the hydrogen chloride oxidation reaction method using the hydrogen chloride oxidation reaction apparatus of the present invention, the mixing of the raw material gases and/or the introduction of the recycled gases and the preheating of the mixed gases can be carried out without generating corrosion on the gas contact surface of the mixing portion for mixing the raw material gases, on the gas contact surface of the introducing portion for introducing the recycled gases, and on the gas contact surface of the transfer piping portion for transferring the raw material gases and the recycled gases to the reactor for hydrogen chloride oxidation reaction in a process of producing chlorine by oxidizing hydrogen chloride through a contact gas phase reaction in the presence of a catalyst by using hydrogen chloride and oxygen as major raw materials. Furthermore, by providing a step of supplying water vapor so that the moisture concentration in the mixed gases at the portion that is made of or covered with tantalum or a tantalum-tungsten alloy is 0.5 mol% or above, corrosion of the portions that are made of or covered with tantalum or a tantalum-tungsten alloy can be prevented with certainty.

### EXAMPLES

The result of measurement of anti-corrosiveness of tantalum, SUS316L, and nickel against mixed gases is shown below.

**Table 1**

| Test No. | Temperature | Pressure | Gas composition (mol%) | | | | Corrosion rate (mm/year) | | | Presence or absence of embrittlement |
|---|---|---|---|---|---|---|---|---|---|---|
| | (°C) | (MPa) | HCl | O₂ | H₂O | Cl₂ | Tantalum | SUS316L | Nickel | Tantalum |
| 1 | 156 | 0.4 | 63.6 | 31.8 | 3.2 | 1.5 | 0.000 | 13.98 | 0.085 | Absent |
| 2 | 156 | 0.4 | 64.5 | 32.2 | 3.2 | 0.0 | 0.004 | - | 0.033 | Absent |
| 3 | 177 | 0.4 | 64.5 | 32.2 | 3.2 | 0.0 | - | - | 0.022 | - |
| 4 | 200 | 0.4 | 65.0 | 32.5 | 1.0 | 1.5 | 0.001 | 0.003 | 0.002 | Absent |
| 5 | 200 | 0.4 | 65.3 | 32.7 | 0.5 | 1.5 | 0.000 | 0.004 | 0.002 | Absent |
| 6 | 200 | 0.4 | 64.5 | 32.2 | 3.2 | 0.0 | 0.005 | - | 0.010 | Absent |
| 7 | 250 | 0.4 | 65.3 | 32.7 | 0.5 | 1.5 | 0.000 | 0.004 | 0.003 | Absent |
| 8 | 300 | 0.4 | 64.5 | 32.2 | 3.2 | 0.0 | 0.000 | - | 0.010 | Present |
| 9 | 250 | Ordinary Pressure | 0.0 | 100 | 0.0 | 0.0 | 0.000 | 0.000 | 0.000 | Present |

### [Test method]

Table 1 shows the corrosion rate and the presence or absence of embrittlement related to a tantalum test piece when each of test pieces of tantalum, SUS316L, and nickel was exposed to a gas having a varying mixed gas composition at various temperatures. Here, the gas composition ratio of Table 1 is assumed to be the composition ratio of the hydrogen chloride gas and the oxygen gas which are the raw materials in the hydrogen chloride oxidation process, the mixed raw material gases, and the mixed gases obtained by introduction of the recycled gas to these raw material gases. The reason why chlorine is contained in the mixed gases in some tests is that, in collecting unreacted hydrogen chloride and oxygen after the hydrogen chloride oxidation reaction, a part of the chlorine which is the product may be mixed with these recycled gases.

### <Corrosion rate>

The corrosion rate (mm/year) is one parameter that represents the degree of corrosion, and will be one index of whether or not a certain substance has an anti-corrosion property. In Table 1, the rate by which each material decreases in thickness by corrosion is represented by the thickness that is decreased per one year. The corrosion rate in this table has been determined by converting the change in weight of the test piece before and after the test into the thickness of the test piece. Here, the test time was 168 hours for the tests Nos. 1 to 8, and was 720 hours for the test No. 9. Here, for the tantalum, one having a purity of 99.8% was used.

Generally, it is determined that there is little corrosion when the corrosion rate is within about 0.002 mm/year, so that it can be used as a material of the piping for transferring the mixed gases containing hydrogen chloride and oxygen. Also, when it is about 0.02 mm/year or above, it is determined that the degree of corrosion is large, so that it can be said that it is unsuitable as a material of the transfer piping.

### <Embrittlement>

Presence or absence of embrittlement can be one index of whether or not a certain substance has an anti-corrosion property. That is, when embrittlement is confirmed, it is determined that the substance has a low reliability as the apparatus material in such environment. The embrittlement test was carried out by performing a 180°-bending test (the bending radius is double the plate thickness of the test piece) in a three-point bending test method for the test pieces subjected to the above-described corrosion rate test.

The presence or absence of splitting was evaluated by the penetration probing test on the bent test piece surface and the optical microscope observation of the test piece cross-section (magnification of 500 times).

### [Test result]

As shown in Table 1, it can be understood that tantalum has a high anti-corrosion property against the mixed gases containing hydrogen chloride and oxygen. That is, in a wide temperature range of 156 to 300°C, the corrosion rate is 0.000 to 0.005 mm/year, and shows a value of the same degree as or lower than that of SUS316L or nickel (test Nos. 1 to 8). Also, at 156 to 250°C, embrittlement was not confirmed (test Nos. 1, 2, and 4 to 7). By such a property of tantalum, tantalum will be extremely effective as a material for constituting or covering the gas contact surface in a hydrogen chloride oxidation reaction apparatus.

On the other hand, in the case of SUS316L and nickel, though the degree of decrease in the thickness is small at a high temperature of 200°C or higher (test Nos. 4 to 8, corrosion rate 0.002 to 0.010 mm/year), the degree of decrease in the thickness is large at 156°C or 177°C (test Nos. 1 to 3, corrosion rate 0.022 to 13.98 mm/year), and particularly the decrease in the thickness is considerable at 156°C.

Further, at 156 to about 200°C at which the decrease in the thickness is large in the case of SUS316L or nickel, the anti-corrosion property of tantalum against the mixed gases is extremely excellent in the case in which the moisture concentration in the mixed gases is 0.5 mol% or above (test Nos. 1 to 3). That is, even in a temperature range of 156 to about 200°C, tantalum causes neither decrease in the thickness nor embrittlement. By such a property, tantalum can be suitably used for constructing or covering the gas contact surface of the mixing portion, the gas contact surface of the introducing portion for introducing the recycled gas, and the gas contact surface of the transfer piping for transferring the mixed gases and the recycled gas to the reactor for the hydrogen chloride oxidation reaction even in a temperature range of 156 to about 200°C when the mixed gases contain moisture of a predetermined concentration in a process of producing chlorine by oxidation of hydrogen chloride through a contact gas phase reaction in the presence of a catalyst.

The embodiments and the Examples disclosed at this time are an exemplification in all respects and should not be considered as being limitative. The scope of the present invention is shown by the claims rather than the description given above, and it is intended that all the modifications equivalent to or within the scope of the claims are included therein.

### INDUSTRIAL APPLICABILITY

According to the present invention, the mixing of the raw material gases and/or the introduction of the recycled gases and the preheating of the mixed gases can be carried out without generating corrosion on the gas contact surface of the mixing portion for mixing the raw material gases, on the gas contact surface of the introducing portion for introducing the recycled gases, and on the gas contact surface of the transfer piping portion for transferring the raw material gases and the recycled gases to the reactor for hydrogen chloride oxidation reaction in a process of producing chlorine by oxidizing hydrogen chloride through a contact gas phase reaction in the presence of a catalyst by using hydrogen chloride and oxygen as major raw materials.

This can reduce additional work or costs such as for repairing or replacing the corroded portion. Further, contamination of the transfer piping for transferring the raw material gases, the reactor, and the like by metal chloride or the like can be prevented.

## Claims

1. A hydrogen chloride oxidation reaction apparatus for producing chlorine by oxidizing hydrogen chloride through a contact gas phase reaction in the presence of a catalyst by using hydrogen chloride and oxygen as major raw materials, wherein the hydrogen chloride oxidation reaction apparatus comprises a mixing portion for mixing the raw material gases and a transfer piping portion for transferring the mixed raw material gases from the mixing portion to a reactor for a hydrogen chloride oxidation reaction, and wherein a gas contact surface of the mixing portion and/or a part of a gas contact surface of the transfer piping portion is made of tantalum or a tantalum-tungsten alloy or is covered with tantalum or a tantalum-tungsten alloy, and wherein the hydrogen chloride oxidation reaction apparatus further comprises an installation for supplying water vapor to at least a part of the portion that is made of or covered with tantalum or a tantalum-tungsten alloy so that a moisture concentration in the mixed gases at the portion that is made of or covered with tantalum or a tantalum-tungsten alloy is 0.5 mol% or above.

2. The hydrogen chloride oxidation reaction apparatus according to claim 1, further comprising an introducing portion for introducing a recycled gas, which is collected after the hydrogen chloride oxidation reaction, into the mixed raw material gases, wherein a gas contact surface of the introducing portion is made of tantalum or a tantalum-tungsten alloy or is covered with tantalum or a tantalum-tungsten alloy.

3. A hydrogen chloride oxidation reaction method using the hydrogen chloride oxidation reaction apparatus according to claim 1 or 2
wherein water vapour is supplied to at least a part of the portion that is made of or covered with tantalum or a tantalum-tungsten alloy so that a moisture concentration in the mixed gases at the portion that is made of or covered with tantalum or a tantalum-tungsten alloy is 0.5 mol% or above.

## Patentansprüche

1. Eine Chlorwasserstoffoxidationsvorrichtung zur Herstellung von Chlor durch Oxidation von Chlorwasserstoff mittels einer Kontaktgasphasenreaktion in Gegenwart eines Katalysators durch Verwendung von Chlorwasserstoff und Sauerstoff als Hauptausgangsmaterialien, wobei die Chlorwasserstoffoxidationsvorrichtung einen Mischabschnitt zum Mischen der Ausgangsmaterialgase und einen Überleitungsabschnitt zum Überleiten der gemischten Ausgangsmaterialgase aus dem Mischabschnitt in einen Reaktor für eine Chlorwasserstöffoxidation umfasst, und wobei eine Gaskontaktoberfläche des Mischabschnitts und/oder ein Teil einer Gaskontaktoberfläche des Überleitungsabschnitts aus Tantal oder einer Tantal-Wolfram-Legierung hergestellt oder mit Tantal oder einer Tantal-Wolfram-Legierung überzogen ist, und wobei die Chlorwasserstoffoxidationsvorrichtung weiterhin eine Installation zur Einspeisung von Wasserdampf in mindestens einen Teil des Abschnitts umfasst, welcher aus Tantal oder einer Tantal-Wolfram-Legierung hergestellt oder damit überzogen ist, so dass eine Feuchtigkeitskonzentration in den Mischgasen in dem Abschnitt, welcher aus Tantal oder einer Tantal-Wolfram-Legierung hergestellt oder damit überzogen ist, 0,5 Mol-% oder mehr beträgt.

2. Die Chlorwasserstoffoxidationsvorrichtung gemäß Anspruch 1, weiterhin umfassend einen Zufuhrabschnitt zum Zuführen eines recycelten Gases, welches nach der Chlorwasserstoffoxidation aufgefangen wird, in die gemischten Ausgangsmaterialgase, wobei eine Gaskontaktoberfläche des Zufuhrabschnitts aus Tantal oder einer Tantal-Wolfram-Legierung hergestellt oder mit Tantal oder einer Tantal-Wolfram-Legierung überzogen ist.

3. Ein Chlorwasserstoffoxidationsverfahren, welches die Chlorwasserstoffoxidationsvorrichtung gemäß Anspruch 1 oder 2 verwendet, wobei Wasserdampf in mindestens einen Teil des Abschnitts, welcher aus Tantal oder einer Tantal-Wolfram-Legierung hergestellt oder damit überzogen ist, zugeführt wird, so dass eine Feuchtigkeitskonzentration in den gemischten Gasen in dem Abschnitt, welcher aus Tantal oder einer Tantal-Wolfram-Legierung hergestellt oder damit überzogen ist, 0,5 Mol-% oder mehr beträgt.

## Revendications

1. Appareil de réaction d'oxydation de chlorure d'hydrogène pour produire du chlore par oxydation de chlorure d'hydrogène par le biais d'une réaction de contact en phase gazeuse en présence d'un catalyseur en utilisant du chlorure d'hydrogène et de l'oxygène comme matières premières majeures, où l'appareil de réaction d'oxydation de chlorure d'hydrogène comprend une portion de mélange pour mélanger les gaz des matières premières et une portion de tuyauterie de transfert pour transférer les gaz des matières premières mélangés depuis la portion de mélange jusqu'à un réacteur pour une réaction d'oxydation de chlorure d'hydrogène, et où une surface de contact de gaz de la portion de mélange et/ou une partie d'une surface de contact de gaz de la portion de tuyauterie de transfert est réalisée en un alliage de tantale-tungstène ou de tantale ou est couverte avec un alliage de tantale-tungstène ou de tantale, et où l'appareil de réaction d'oxydation de chlorure d'hydrogène comprend en outre une installation pour fournir de la vapeur d'eau à au moins une partie de la portion qui est réalisée en ou couverte avec un alliage de tantale-tungstène ou de tantale de telle sorte qu'une concentration en humidité dans les gaz mélangés dans la portion qui est réalisée en ou couverte avec un alliage de tantale-tungstène ou de tantale vaut 0,5 % molaire ou plus.

2. Appareil de réaction d'oxydation de chlorure d'hydrogène selon la revendication 1, comprenant en outre une portion d'introduction pour introduire un gaz recyclé, lequel est collecté après la réaction d'oxydation du chlorure d'hydrogène, dans les gaz des matières premières mélangés, dans lequel une surface de contact de gaz de la portion d'introduction est réalisée en un alliage de tantale-tungstène ou de tantale ou est couverte avec un alliage de tantale-tungstène ou de tantale.

3. Procédé de réaction d'oxydation de chlorure d'hydrogène utilisant un appareil de réaction d'oxydation de chlorure d'hydrogène selon la revendication 1 ou 2, dans lequel de la vapeur d'eau est fournie à au moins une partie de la portion qui est réalisée en ou couverte avec un alliage de tantale-tungstène ou de tantale de telle sorte qu'une concentration en humidité dans les gaz mélangés dans la portion qui est réalisée en ou couverte avec un alliage de tantale-tungstène ou de tantale vaut 0,5 % molaire ou plus.
